# EUROPEAN PATENT APPLICATION

(11) **EP 4 679 577 A1**
(43) Date of publication of application: **14.01.2026**
(21) Application number: 24767151.4
(22) Date of filing: 05.03.2024
(51) Int. Cl.: H01M 50/105, H01G 11/78, H01G 11/84, H01M 50/103, H01M 50/15

(54) **POWER STORAGE DEVICE, EXTERIOR FILM, AND METHOD FOR MANUFACTURING POWER STORAGE DEVICE**

(30) Priority: 06.03.2023 JP 2023034128; 28.06.2023 JP 2023106528
(71) Applicant: Dai Nippon Printing Co., Ltd., Tokyo 162-8001 (JP)
(72) Inventor: KANAZAWA, Sayako, Tokyo 162-8001 (JP); MIYASHIRO, Kae, Tokyo 162-8001 (JP); URIU, Toshibumi, Tokyo 162-8001 (JP); SASAKI, Miho, Tokyo 162-8001 (JP); ASHIHARA, Yohei, Tokyo 162-8001 (JP); ARAI, Yuta, Tokyo 162-8001 (JP)
(74) Representative: Müller-Boré & Partner Patentanwälte PartG mbB
(86) International application number: PCT/JP2024/008346
(87) International publication number: WO 2024/185784

(57) **Abstract**

This power storage device comprises an electrode assembly and an exterior body sealing the electrode assembly. The exterior body comprises an outer packaging film covering the electrode assembly so as to form an opening portion, and a lid body disposed at the opening portion. The outer packaging film has a first marking which is formed to correspond to at least a part of a corner portion of the lid body.

## Description

### Technical Field

The present invention relates to an electrical storage device, an outer package film, and a method for manufacturing an electrical storage device.

### Background Art

PTL 1 discloses an example of an electrical storage device. This electrical storage device includes an electrode assembly and an outer packaging that seals the electrode assembly. The outer packaging includes an outer package film that wraps the electrode assembly to form opening parts and lids that are disposed at the opening parts. The outer package film and the lids are bonded.

### Citation List

### Patent Literature

PTL 1: Japanese Patent Laid-open Publication No. 2022-123686

### Summary of Invention

### Technical Problem

In the electrical storage device, the lid is disposed at an opening part of the outer package film after the electrode assembly is wrapped with the outer package film. Therefore, there is a concern that the position of the lid with respect to the outer package film may deviate from a prescribed position. If the position of the lid with respect to the outer package film deviates from the prescribed position, various problems such as a decrease in joint area between the outer package film and the lid may occur.

An object of the present invention is to provide an electrical storage device with a lid located with high accuracy with respect to an outer package film, the outer package film used for the electrical storage device, and a method for manufacturing the electrical storage device.

### Solution to Problem

An electrical storage device according to a first aspect of the present invention is an electrical storage device including: an electrode assembly; and an outer packaging that seals the electrode assembly, in which the outer packaging includes an outer package film that wraps the electrode assembly to form an opening part, and a lid that is disposed at the opening part, and the outer package film includes a first marking formed to correspond to at least some of corners of the lid.

An electrical storage device according to a second aspect of the present invention is the electrical storage device according to the first aspect, in which the first marking is at least one of a fold line, a line, and a cut that does not penetrate through the outer package film.

An electrical storage device according to a third aspect of the present invention is the electrical storage device according to the first aspect or the second aspect, in which the first marking is formed at least in a range including an end part of the corner of the lid.

An electrical storage device according to a fourth aspect of the present invention is the electrical storage device according to any one of the first to third aspects, in which the outer package film includes a second marking that is formed to correspond to at least some of corners of the electrode assembly.

An electrical storage device according to a fifth aspect of the present invention is the electrical storage device according to the fourth aspect, in which the first marking and the second marking are connected.

An outer package film according to a sixth aspect of the present invention is an outer package film that is used as an outer packaging of an electrical storage device, the electrical storage device including an electrode assembly and a lid, the outer package film including a first marking that is formed to correspond to at least some of corners of the lid.

An outer package film according to a seventh aspect of the present invention is the outer package film according to the sixth aspect, in which the first marking is at least one of a fold line, a line, and a cut that does not penetrate through the outer package film.

An outer package film according to an eighth aspect of the present invention is the outer package film according to the sixth aspect or the seventh aspect, in which the first marking is formed at least in a range including an end part of the corner of the lid.

An outer package film according to a ninth aspect of the present invention includes a second marking that is formed to correspond to at least some of corners of the electrode assembly, in the outer package film according to any one of the sixth to eighth aspects.

An outer package film according to a tenth aspect of the present invention is the outer package film according to the ninth aspect, in which the first marking and the second marking are connected.

A method for manufacturing an electrical storage device according to an eleventh aspect of the present invention is a method for manufacturing an electrical storage device including an electrode assembly and an outer packaging that seals the electrode assembly, the outer packaging including an outer package film that wraps the electrode assembly to form an opening part, and a lid that is disposed at the opening part, the outer package film including a first marking that is formed to correspond to at least some of corners of the lid, the method for manufacturing the electrical storage device including: a marking formation process of forming the first marking on the outer package film.

A method for manufacturing an electrical storage device according to a twelfth aspect of the present invention is the method for manufacturing an electrical storage device according to the eleventh aspect, the method including: a disposition process of disposing the lid on the outer package film such that a corner of the lid and the first marking coincide with each other, the disposition process being performed later than the marking formation process; and a wrapping process of wrapping the electrode assembly and the lid by the outer package film with the outer package film folded along the first marking, the wrapping process being performed later than the disposition process. Advantageous Effects of Invention

The electrical storage device, the outer package film used for the electrical storage device, and the method for manufacturing the electrical storage device according to the present invention can contribute to enhancement of accuracy of the position of a lid with respect to an outer package film.

### Brief Description of Drawings

[Fig. 1A] Fig. 1A is a perspective view of an electrical storage device of an embodiment.
[Fig. 1B] Fig. 1B is a diagram related to a method for measuring sealing strength of a second seal portion of the electrical storage device in Fig. 1A.
[Fig. 2] Fig. 2 is a perspective view of an electrode assembly included in the electrical storage device in Fig. 1A.
[Fig. 3] Fig. 3 is a sectional view illustrating a layer configuration of an outer package film included in the electrical storage device in Fig. 1A.
[Fig. 4] Fig. 4 is a perspective view of a lid included in the electrical storage device in Fig. 1A.
[Fig. 5] Fig. 5 is a diagram of a state where the outer package film included in the electrical storage device in Fig. 1A is spread out.
[Fig. 6] Fig. 6 is a schematic view of a fold line forming device that forms a fold line on the outer package film in Fig. 5.
[Fig. 7] Fig. 7 is a flowchart illustrating an example of a method for manufacturing the electrical storage device in Fig. 1A.
[Fig. 8] Fig. 8 is a diagram related to a third process in Fig. 7.
[Fig. 9] Fig. 9 is a diagram related to a fourth process in Fig. 7.
[Fig. 10] Fig. 10 is a diagram of a state where an outer package film included in an electrical storage device of a modification example is spread out.
[Fig. 11] Fig. 11 is a diagram of a state where an outer package film included in an electrical storage device of another modification example is spread out.
[Fig. 12] Fig. 12 is a schematic diagram illustrating another example of the fold line forming device.
[Fig. 13] Fig. 13 is a table illustrating results of a first test, a second test, and a third test.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less. In this specification, the corner includes a corner formed with an R surface as well as a corner having a right angle shape.

### [1. First embodiment]

### <1-1. Configuration of electrical storage device>

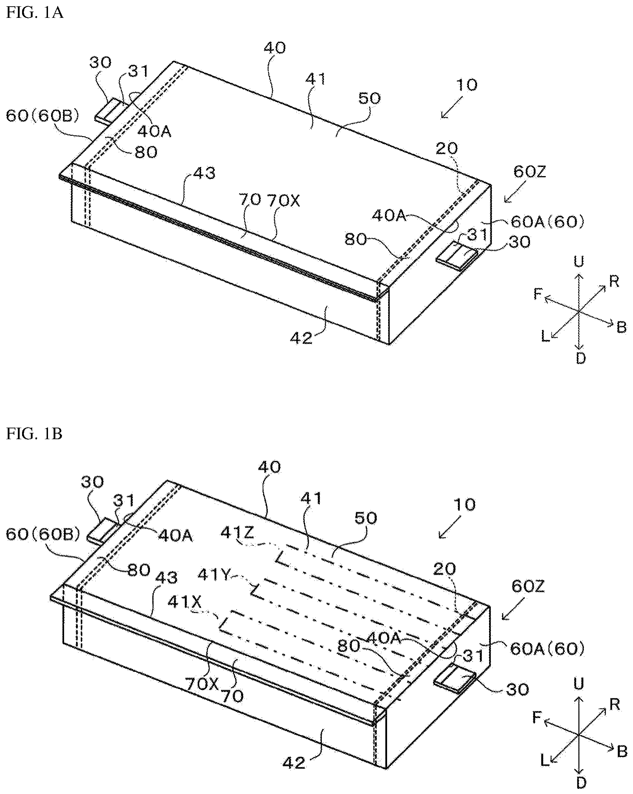

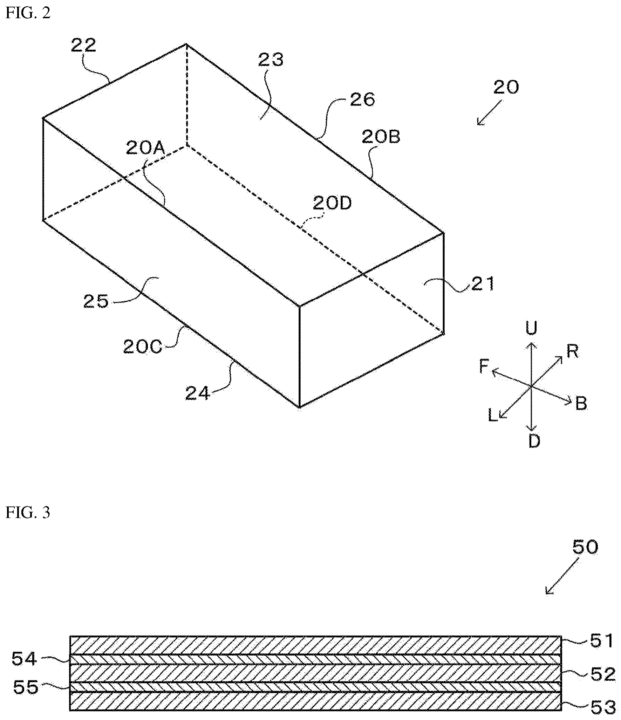

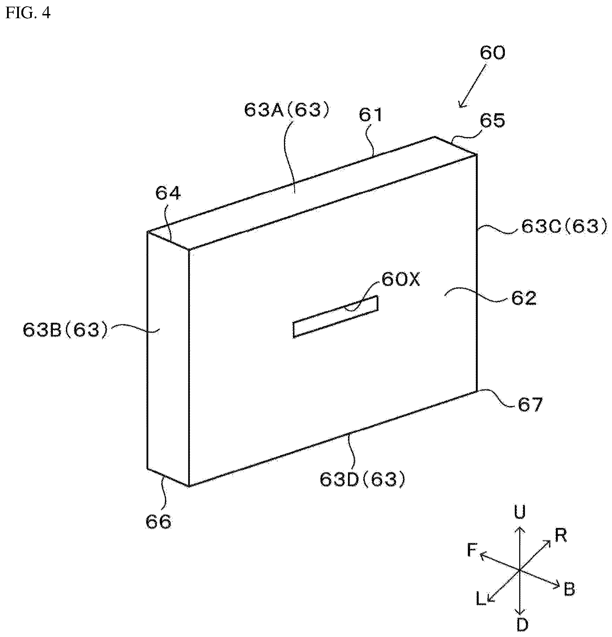

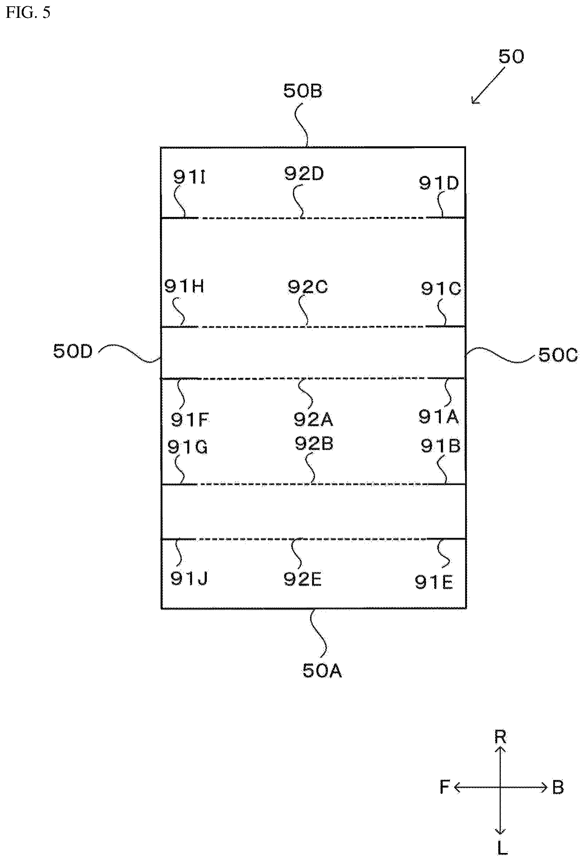

Fig. 1A is a plan view schematically illustrating an electrical storage device 10 of a first embodiment. Fig. 1B is a diagram related to a method for measuring sealing strength of a second seal portion 80 of the electrical storage device 10. Fig. 2 is a perspective view of an electrode assembly 20 included in the electrical storage device in Fig. 1A. Fig. 3 is a sectional view illustrating a layer configuration of an outer package film 50 included in the electrical storage device 10 in Fig. 1A. Fig. 4 is a perspective view of a lid 60 included in the electrical storage device 10 in Fig. 1A. Fig. 5 is a diagram of a state where the outer package film 50 included in the electrical storage device 10 in Fig. 1A is spread out. Note that in Fig. 1A, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The directions indicated by each of arrows UDLRFB will also be the same in the subsequent drawings.

The electrical storage device 10 includes an electrode assembly 20, electrode terminals 30, and an outer packaging 40. The electrode assembly 20 includes, for example, electrodes (positive electrode and negative electrode) forming an electrical storage member, such as a lithium ion battery, a capacitor, an all-solid-state battery, a semi-solid-state battery, a pseudo-solid-state battery, a polymer battery, an all-polymer battery, a lead storage battery, a nickel-metal hydride storage battery, a nickel-cadmium storage battery, a nickel-iron storage battery, a nickel-zinc storage battery, a silver oxide-zinc storage battery, a metal-air battery, a polyvalent cation battery, or a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal column.

In the present embodiment, the electrical storage device 10 includes two electrode terminals 30. The electrode terminals 30 are metal terminals for use in input and output of electrical power in the electrode assembly 20. One end part of each electrode terminal 30 is electrically connected to an electrode (a positive electrode or a negative electrode) included in the electrode assembly 20. The other end part of each electrode terminal 30 protrudes outward from an end edge of the outer packaging 40, for example. Note that the electrode terminal 30 is only required to enable input and output of electrical power in the electrode assembly 20, and is not required to protrude from the outer packaging 40, for example. In a case where lids 60 described later are made from, for example, metal, the lids 60 may also function as the electrode terminal 30, and in this case, the lids 60 having a function as an electrode terminal may, but are not required to, protrude from the outer packaging 40.

As illustrated in Fig. 2, the electrode assembly 20 has a front surface 21, a back surface 22, an upper surface 23, a lower surface 24, a first side surface 25, and a second side surface 26 in the present embodiment. The front surface 21 faces one of the lids 60. The back surface 22 faces the other lid 60. The upper surface 23 constitutes one of a pair of first surfaces 41 of the outer packaging 40, which will be described later. The lower surface 24 constitutes the other one of the pair of first surfaces 41 of the outer packaging 40, which will be described later. The first side surface 25 constitutes one of a pair of second surfaces 42 of the outer packaging 40, which will be described later. The second side surface 26 constitutes the other one of the pair of second surfaces 42 of the outer packaging 40, which will be described later.

The electrode assembly 20 includes a corner 20A, a corner 20B, a corner 20C, and a corner 20D. The corners 20A to 20D are formed with R surfaces. At least one of the corners 20A to 20D may be formed with an R surface. The corner 20A is formed at a boundary between the upper surface 23 and the first side surface 25. The corner 20B is formed at a boundary between the upper surface 23 and the second side surface 26. The corner 20C is formed at a boundary between the first side surface 25 and the lower surface 24. The corner 20D is formed at a boundary between the second side surface 26 and the lower surface 24. Note that the shapes of the R surfaces at the corners 20A to 20D are omitted in Fig. 2 for simplification of the drawing.

The metal material for forming the electrode terminal 30 is, for example, aluminum, nickel, copper or the like. For example, in a case where the electrode assembly 20 is a lithium ion battery, the electrode terminal 30 connected to the positive electrode is typically made from aluminum or the like, and the electrode terminal 30 connected to the negative electrode is typically made from copper, nickel or the like. Note that the outermost layer of the electrode assembly 20 is not necessarily an electrode, and may be, for example, a protective tape or a separator.

The outer packaging 40 seals the electrode assembly 20. The outer packaging 40 includes the outer package film 50 and the pair of lids 60. The outer package film 50 wraps the electrode assembly 20 such that a pair of opening parts 40A are formed. In the present embodiment, the outer package film 50 is wound around the electrode assembly 20 such that the pair of opening parts 40A are formed. Note that the electrode assembly 20 may be housed inside the outer package film 50 configured into a tubular shape such that a pair of opening parts 40A are formed, and the opening parts 40A may be closed by the lids 60. The pair of lids 60 are disposed on the lateral sides of the electrode assembly 20, respectively, to close the pair of opening parts 40A.

It is preferable that adhesive films 31 be bonded to the electrode terminals 30 from the viewpoint of suitable bonding to the lids 60. The adhesive films 31 can be arbitrarily selected as long as they are films capable of bonding the electrode terminals 30 formed of a metal to the lids 60 formed of a resin. For the adhesive film 31, for example, a polyolefin-based resin such as a polyethylene-based resin or a polypropylene-based resin, a cyclic polyolefin-based resin, or an acid-modified polyolefin-based resin obtained by graft-modifying a polyolefin-based resin with an acid such as maleic anhydride can be used. The adhesive film 31 can be a film having a single layer or two or more layers of any of the above-mentioned resins. In the present embodiment, the adhesive films 31 are bonded to substantially the entire parts of the electrode terminals 30 covered by the lids 60.

For example, there is a method in which a housing portion (recess) for housing the electrode assembly 20 is formed in the outer package film 50 through cold molding. However, it is not always easy to form a deep housing portion by such a method. If an attempt is made to form a deep (for example, 15 mm in terms of molding depth) accommodating portion (recess) by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. For reducing a dead space between the electrode assembly 20 and the outer package film 50 in order to improve the volume energy density of the electrical storage device 10, it is preferable that the outer package film 50 be wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As illustrated in Fig. 3, the outer package film 50 is, for example, a laminate (laminated film) including a base material layer 51, a barrier layer 52 and a heat-sealable resin layer 53 in the stated order. Note that the outer package film 50 is not required to include all these layers, and may be free of, for example, the barrier layer 52. In other words, the outer package film 50 is only required to be made from a material that is flexible and easy to bend, and the outer package film 50 may be made from, for example, a resin film. Note that the outer package film 50 is preferably heat-sealable.

The base material layer 51 included in the outer package film 50 is a layer for imparting heat resistance to the outer package film 50 to suppress generation of pinholes which may occur during processing or distribution. The base material layer 51 includes, for example, at least one of a stretched polyester resin layer and a stretched polyamide resin layer. For example, by the base material layer 51 including at least one of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Furthermore, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 5 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 contains a layer formed of a metal material. Specific examples of the metal material forming the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed of the metal material described above may contain a metal recycled material. Examples of the metal recycled material include recycled materials of an aluminum alloy, stainless steel, titanium steel, or a steel plate. These recycled materials can be each obtained by a known method. The recycled material of the aluminum alloy can be obtained by, for example, a manufacturing method described in International Publication No. WO 2022/092231. The barrier layer 52 may be formed only of a recycled material, or may be formed of a mixed material of a recycled material and a virgin material. Note that the metal recycled material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed of, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 mass% to 9.0 mass%, more preferably 0.5 mass% to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed of austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, the barrier layer 52 may perform a function as a barrier layer suppressing at least ingress of moisture, and has a thickness of, for example, about 5 µm to 200 µm. The thickness of the barrier layer 52 is preferably about 85 µm or less, more preferably about 50 µm or less, still more preferably about 40 µm or less, particularly preferably about 35 µm or less. The thickness of the barrier layer 52 is preferably about 10 µm or more, more preferably about 20 µm or more, still more preferably about 25 µm or more. The thickness of the barrier layer 52 is preferably in the range of about 10 µm to 85 µm, about 10 µm to 50 µm, about 10 µm to 40 µm, about 10 µm to 35 µm, about 20 µm to 85 µm, about 20 µm to 50 µm, about 20 µm to 40 µm, about 20 µm to 35 µm, about 25 µm to 85 µm, about 25 µm to 50 µm, about 25 µm to 40 µm, or about 25 µm to 35 µm. In a case where the barrier layer 52 is formed of an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 µm to 200 µm, about 35 µm to 85 µm, about 35 µm to 75 µm, about 35 µm to 70 µm, about 45 µm to 200 µm, about 45 µm to 85 µm, about 45 µm to 75 µm, about 45 µm to 70 µm, about 50 µm to 200 µm, about 50 µm to 85 µm, about 50 µm to 75 µm, about 50 µm to 70 µm, about 55 µm to 200 µm, about 55 µm to 85 µm, about 55 µm to 75 µm, or about 55 µm to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, in a case where the barrier layer 52 is made of a stainless steel foil, the thickness of the stainless steel foil is preferably about 60 µm or less, more preferably about 50 µm or less, still more preferably about 40 µm or less, even more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

In a case where the barrier layer 52 is an aluminum foil, it is preferable that a corrosion-resistant film be provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (for example, an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. In a case where the buffer layer is made from a nonwoven fabric, the lower limit of the thickness of the buffer layer is preferably 100 µm, more preferably 200 µm, or still more preferably 1,000 µm. In a case where the buffer layer is made from a nonwoven fabric, the upper limit of the thickness of the buffer layer is preferably 5,000 µm, or more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm among these.

In a case where the buffer layer is made from rubber, the lower limit of the thickness of the buffer layer is preferably 1 mm, more preferably 0.5 mm. In a case where the buffer layer is made from rubber, the upper limit of the thickness of the buffer layer is preferably 10 mm, more preferably 5 mm, still more preferably 2 mm. In a case where the buffer layer is made from rubber, the thickness of the buffer layer is preferably in the range of 1 mm to 10 mm, 1 mm to 5 mm, 1 mm to 2 mm, 0.5 mm to 10 mm, 0.5 mm to 5 mm or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

The lid 60 illustrated in Fig. 4 has a cuboid shape, for example, and is a resin molded article formed from a resin material, for example. The lid 60 may be formed by, for example, cold-molding the outer package film 50, or may be a metal molded article. Materials constituting the lid 60 may include at least two or more kinds of materials from among a metal oxide, a carbon material, and a rubber material. Note that in a case where the pair of lids 60 are distinguished from each other, the lid 60 disposed on one side with respect to the electrode assembly 20 in the FB direction may be referred to as a lid 60A, and the lid disposed on the other side may be referred to as a lid 60B. In the present embodiment, the lid 60A and the lid 60B have similar configurations, and these will thus be simply referred to as lids 60 in a case where these are not particularly distinguished.

Each lid 60 includes a first surface 61, a second surface 62, and a sealing surface 63. The first surface 61 faces the electrode assembly 20. The second surface 62 is a surface on a side opposite to the first surface 61. The sealing surface 63 is connected to the first surface 61 and the second surface 62 and is bonded to the heat-sealable resin layer 53 of the outer package film 50.

The sealing surface 63 includes a first sealing surface 63A, a second sealing surface 63B, a third sealing surface 63C, and a fourth sealing surface 63D. The first sealing surface 63A forms the upper surface of the lid 60. The first sealing surface 63A extends in a first direction (LR direction in the present embodiment) in front view of the lid 60. The second sealing surface 63B and the third sealing surface 63C are connected to the first sealing surface 63A and form side surfaces of the lid 60. The second sealing surface 63B and the third sealing surface 63C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth sealing surface 63D forms the lower surface of the lid 60. The fourth sealing surface 63D extends in a first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on top of another. From another viewpoint, in a case where the lid 60 has a plate shape, the sealing surface 63 of the lid 60 is preferably thick to some extent such that the sealing surface 63 of the lid 60 and the outer package film 50 can be suitably heat-sealed when the second seal portion 80, which will be described later, is formed. The minimum value of the thickness of the lid 60 is, for example, 1.0 mm, more preferably 3.0 mm, still more preferably 4.0 mm. The maximum value of the thickness of the lid 60 is, for example, 20 mm, more preferably 15 mm, still more preferably 10 mm. The maximum value of the thickness of the lid 60 may be 20 mm or more. The thickness of the material for forming the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, in the case where the lid 60 is described as having a plate shape, an aspect in which the lid 60 is made only of the film specified by Japanese Industrial Standard (JIS), [Packaging Terminology] Standard is not included. Note that the thickness of the lid 60 may vary depending on a portion of the lid 60. In a case where the thickness of the lid 60 varies depending on a portion, the thickness of the thickest portion of the lid 60 is defined as a thickness of the lid 60.

The lid 60 further includes corners 64, 65, 66, and 67. The corner 64 is a boundary between the first sealing surface 63A and the second sealing surface 63B. The corner 65 is a boundary between the first sealing surface 63A and the third sealing surface 63C. The corner 66 is a boundary between the fourth sealing surface 63D and the second sealing surface 63B. The corner 67 is a boundary between the fourth sealing surface 63D and the third sealing surface 63C. The shapes of the corners 64 to 67 may be angular or may be rounded by performing round chamfering, in other words, by forming R surfaces. In the present embodiment, the corners 64 to 67 are angular.

In the present embodiment, the lid 60 is formed from a resin material. Here, "formed from a resin material" means that the content of the resin material is 50 mass% or more, preferably 80 mass% or more, more preferably 90 mass% or more, and still more preferably 95 mass% or more when the total amount of materials constituting the lid 60 is defined as 100 mass%. In other words, the materials constituting the lid 60 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, may be a copolymer thereof, or a modified product of the copolymer. Among them, the resin material is preferably a heat-sealable resin such as polyester or polyolefin, and more preferably polyolefin. In a case where the resin material is a resin, the lid 60 may be molded by any molding method.

Specific examples of the polyester include polyethylene terephthalate, polybutylene terephthalate, polyethylene naphthalate, polybutylene naphthalate, polyethylene isophthalate and copolyester. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the lid 60 against a temperature change can be improved.

The melt mass flow rate of the resin material contained in the material constituting the lid 60 is preferably in the range of 1 g/10 min to 80 g/10 min, and more preferably in the range of 5 g/10 min to 60 g/10 min. The melt mass flow rate is measured on the basis of JIS K7210-1:2014.

In another example, the lid 60 may be formed from a metal material. Here, "formed from a metal material" means that the content of the metal material is 50 mass% or more, preferably 80 mass% or more, more preferably 90 mass% or more, and still more preferably 95 mass% or more when the total amount of materials constituting the lids 60 is defined as 100 mass%. In other words, the materials constituting the lid 60 can contain materials other than the metal material in addition to the metal material. The metal material constituting the lid 60 can be arbitrarily selected. The metal material constituting the lids 60 is, for example, aluminum, an aluminum alloy, nickel, copper, or a copper alloy. For example, in a case where the electrode assembly 20 is a lithium ion battery, the lid 60 connected to the positive electrode is preferably made of aluminum or an aluminum alloy. The lid 60 connected to the negative electrode is preferably made of nickel, copper, or a copper alloy. The material constituting the lid 60 connected to the negative electrode may be copper plated with nickel. The material constituting the lid 60 may include a recycled metal material.

In the present embodiment, a through-hole 60X into which the electrode terminal 30 is inserted is formed in the lid 60. The through-hole 60X penetrates through the first surface 61 and the second surface 62. The electrode terminals 30 project to the outside of the outer packaging 40 through through-holes 60X formed in the lids 60 in a state where the electrode assembly 20 is wrapped by the outer package film 50. A small gap between the through-hole 60X of the lid 60 and the electrode terminal 30 is filled with, for example, a resin. Note that in the electrical storage device 10, the position at which the electrode terminal 30 protrudes to the outside can be arbitrarily selected. For example, the electrode terminal 30 may protrude to the outside from a hole formed in any one of the six surfaces that the outer packaging 40 has. In this case, a small gap between the outer packaging 40 and the electrode terminal 30 is filled with, for example, a resin. In another example, the electrode terminals 30 may project to the outside of the outer packaging 40 from between sealing surfaces 63 of the lids 60 and the outer package film 50. In this case, the through-holes 60X may not be formed in the lids 60. Although the lid 60 and the electrode terminal 30 are provided separately in the electrical storage device 10, the lid 60 and the electrode terminal 30 may be integrally formed. Note that the through-holes 60X may not be formed in the lids 60 even in a case where the electrode terminals 30 do not project from end edges of the outer packaging 40.

In the present embodiment, surfaces of the outer package film 50 which face each other (heat-sealable resin layer 53) are heat-sealed in a state where the outer package film 50 is wrapped around the electrode assembly 20 to have opening parts 40A to thereby form a first seal portion 70.

The first seal portion 70 is formed by heat-sealing a part including a first edge 50A and a part including a second edge 50B of the outer package film 50 illustrated in Fig. 5. The first seal portion 70 extends in a longitudinal direction (FB direction) of the outer packaging 40. In the outer packaging 40, the position at which the first seal portion 70 is formed can be arbitrarily selected. In the present embodiment, a root 70X of the first seal portion 70 is preferably located on a side 43 of a boundary between the first surface 41 and the second surface 42 of the outer packaging 40. The first surface 41 has a larger area than the second surface 42. The root 70X of the first seal portion 70 may be located on an arbitrary surface of the outer packaging 40. In the present embodiment, the first seal portion 70 protrudes further outward than the electrode assembly 20 in plan view. The first seal portion 70 may be folded toward the second surface 42 of the outer packaging 40, or may be folded toward the first surface 41, for example.

In the present embodiment, a second seal portion 80 is formed by the heat-sealable resin layer 53 of the outer package film 50 and the sealing surface 63 of the lid 60 being heat-sealed. Hereinafter, the sealing strength between the heat-sealable resin layer 53 of the outer package film 50 and the sealing surface 63 of the lid 60 may be referred to as sealing strength of the second seal portion 80. Note that the sealing strength of the second seal portion 80 is the sealing strength between the long side part of the sealing surface 63, that is, the heat-sealable resin layer 53 on the sealing surface 63 extending in the LR (width) direction in Fig. 1A and the lid 60.

The sealing strength of the second seal portion 80 is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 80. The length of the lid 60 in the LR direction is 45 mm or more. Next, the sealing strength of each of strip-shaped members 41X, 41Y, and 41Z is measured by pulling the end parts of the strip-shaped members 41X, 41Y, and 41Z on the side opposite to the end parts thereof joined to the lid 60 upward (the direction opposite to the first surface 41B) in the UD direction. In the present embodiment, the sealing strength of the second seal portion 80 is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 80 is an average value of the sealing strengths of the three strip-shaped members converted into the value at the width of 15 mm. Note that the sealing strength of the second seal portion 80 in a case where the lid 60 is divided into a plurality of parts including long sides and short sides is sealing strength of the long side parts of the sealing surfaces 63 of the plurality of parts.

From the viewpoint of suitably maintaining the state where the electrode assembly 20 is sealed with the outer packaging 40, the sealing strength of the second seal portion 80 is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 80 is 40 N/15 mm or more, the state where the electrode assembly 20 is sealed with the outer packaging 40 is suitably maintained even if the electrical storage device 10 is used for, for example, several years (less than 10 years). In a case where the sealing strength of the second seal portion 80 is 85 N/15 mm or more, the state where the electrode assembly 20 is sealed with the outer packaging 40 is suitably maintained even if the electrical storage device 10 is used for, for example, 10 years or more. The sealing strength of the second seal portion 80 is preferably 300 N/15 mm or less. The sealing strength of the second seal portion 80 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

The electrical storage device 10 of the present embodiment is manufactured by winding the outer package film 50 around the electrode assembly 20 and the lids 60 in a state where the electrode assembly 20 and the lids 60 are disposed on the outer package film 50. If the positions of the lids 60 with respect to the outer package film 50 deviate, there is a concern that at least one of a first problem and a second problem may occur.

The first problem is a decrease in joint area between the outer package film 50 and the lids 60. There is thus a concern that sealing strength of the second seal portion 80 may decrease.

The second problem is a decrease in adhesion of the outer package film 50 with respect to the lids 60 and formation of a gap between the sealing surfaces 63 of the lids 60 and the outer package film 50. There is thus a concern that holes may be formed at corners 64 to 67 of the lids 60 when the second seal portion 80 is formed, for example. Furthermore, there is a concern of wrinkles occurring in the outer package film 50.

In the present embodiment, the outer package film 50 includes a first marking 91 (see Fig. 5) formed to correspond to at least some of the corners 64 to 67 of the lids 60 in order to enhance accuracy of the positions of the lids 60 with respect to the outer package film 50. In the present embodiment, a second marking 92 (see Fig. 5) formed to correspond to at least some of the corners 20A to 20D of the electrode assembly 20 is preferably included to enhance accuracy of the position of the electrode assembly 20 with respect to the outer package film 50. Note that in Fig. 5, the first marking 91 is expressed by the solid line and the second marking 92 is expressed by the dashed line for easy understanding of the ranges where the first marking 91 and the second marking 92 are formed.

A specific configuration of the first marking 91 can be arbitrarily selected as long as it is possible to recognize the positions of the lids 60 with respect to the outer package film 50 with the configuration. In the present embodiment, first marking 91 is a fold line formed on the outer package film 50. The first marking 91 may be a line. In a case where the first marking 91 is a line, a line as the first marking 91 may be formed with an ink. In the case where the first marking 91 is a line, a line as the first marking 91 may be formed by applying a color to the surface of the outer package film 50 with a laser. The kind of the line can be arbitrarily selected. The line may be, for example, a solid line, a broken line, a one-dot chain line, or a two-dot chain line. The first marking 91 may be a cut that does not penetrate through the outer package film 50. The first marking 91 may include at least two of a fold line, a line, and a cut. The cut may be continuous in the FB direction or may be intermittently formed. The surface of outer package film 50 on which the first marking 91 is formed may be at least one of the outer surface and the inner surface of the outer package film 50.

A specific configuration of the second marking 92 can be arbitrarily selected as long as it is possible to recognize the positions of the electrode assembly 20 with respect to the outer package film 50 with the configuration. In the present embodiment, the second marking 92 is a fold line formed on the outer package film 50. The second marking 92 may be a line. In the case where the second marking 92 is a line, a line as the second marking 92 may be formed by applying a color to the surface of the outer package film 50 with a laser. The kind of the line can be arbitrarily selected. The line may be, for example, a solid line, a broken line, a one-dot chain line, or a two-dot chain line. The second marking 92 may be a cut that does not penetrate through the outer package film 50. The second marking 92 may include at least two of a fold line, a line, and a cut. The cut may be continuous in the FB direction or may be intermittently formed. The surface of outer package film 50 on which the second marking 92 is formed may be at least one of the outer surface and the inner surface of the outer package film 50.

As illustrated in Fig. 5, the first marking 91 includes markings 91A to 91E corresponding to the lid 60A and markings 91F to 91J corresponding to the lid 60B.

The marking 91A is a marking corresponding to the corner 67 of the lid 60A. The marking 91B is a marking corresponding to the corner 66 of the lid 60A. The marking 91C is a marking corresponding to the corner 65 of the lid 60A. The marking 91D and the marking 91E are markings corresponding to the corner 64 of the lid 60A.

The markings 91A to 91E extend from a third edge 50C to a fourth edge 50D of the outer package film 50. The lengths of the markings 91A to 91E in the FB direction can be arbitrarily selected. In the present embodiment, the lengths of the markings 91A to 91E in the FB direction are equal to the lengths of the corresponding corners 64 to 67 of the lid 60A. The lengths of the markings 91A to 91E in the FB direction may be longer or shorter than the lengths of the corresponding corners 64 to 67 of the lid 60A. The markings 91A to 91E are preferably formed at least at end parts of the corresponding corners 64 to 67 in the FB direction.

The marking 91F is a marking corresponding to the corner 66 of the lid 60B. The marking 91G is a marking corresponding to the corner 67 of the lid 60B. The marking 91H is a marking corresponding to the corner 64 of the lid 60B. The marking 91I and the marking 91J are markings corresponding to the corner 65 of the lid 60B.

The markings 91F to 91J extend from the fourth edge 50D to the third edge 50C of the outer package film 50. The lengths of the markings 91F to 91J in the FB direction can be arbitrarily selected. In the present embodiment, the lengths of the markings 91F to 91J in the FB direction are equal to the lengths of the corresponding corners 64 to 67 of the lid 60B. The lengths of the markings 91F to 91J in the FB direction may be longer or shorter than the lengths of the corresponding corners 64 to 67 of the lid 60B. The markings 91F to 91J are preferably formed at least at end parts of the corresponding corners 64 to 67 in the FB direction.

The second marking 92 includes markings 92A to 92E. The marking 92A corresponds to the corner 20D of the electrode assembly 20. The marking 92A is connected to the marking 91A and the marking 91F. The marking 92A may not be connected to at least one of the marking 91A and the marking 91F.

The marking 92B corresponds to the corner 20C of the electrode assembly 20. The marking 92B is connected to the marking 91B and the marking 91G. The marking 92B may not be connected to at least one of the marking 91B and the marking 91G.

The marking 92C corresponds to the corner 20B of the electrode assembly 20. The marking 92C is connected to the marking 91C and the marking 91H. The marking 92C may not be connected to at least one of the marking 91C and the marking 91H.

The marking 92D and the marking 92E correspond to the corner 20A of the electrode assembly 20. The marking 92D is connected to the marking 91D and the marking 91I. The marking 92D may not be connected to at least one of the marking 91D and the marking 91I.

The marking 92E is connected to the marking 91E and the marking 91J. The marking 92E may not be connected to at least one of the marking 91E and the marking 91J.

The markings 92A to 92E extend in the FB direction. The lengths of the markings 92A to 92E in the FB direction can be arbitrarily selected. In the present embodiment, the lengths of the markings 92A to 92E in the FB direction are longer than the lengths of the corresponding corners 20A to 20D of the electrode assembly 20. The lengths of the markings 92A to 92E in the FB direction may be equal to or shorter than the lengths of corners 20A to 20D of the electrode assembly 20. The markings 92A to 92E are preferably formed at least at end parts of the corresponding corners 20A to 20D in the FB direction.

In the present embodiment, in a case where the first seal portion 70 is folded from the side 43 toward the second surface 42 of the outer packaging 40 in Fig. 1A, the markings 92E, 91E, and 91J are mountain folded when the markings 92D, 91D, and 91I, the markings 92C, 91C, and 91H, the markings 92A, 91A, and 91F, and the markings 92B, 91B, and 91G are valley folded. In a case where the first seal portion 70 is not folded, at least either the markings 92D, 91D, and 91I or the markings 92E, 91E, and 91J located on the side 43 may be omitted.

### <1-2. Configuration of fold line forming device>

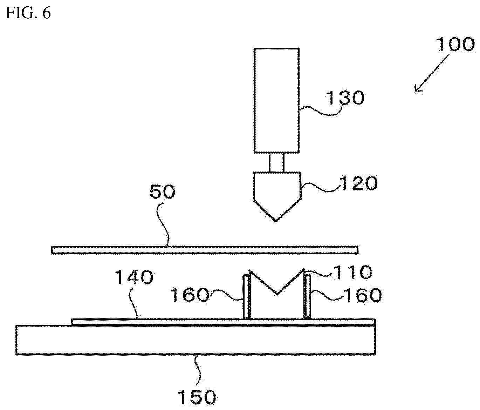

Fig. 6 is a schematic view illustrating an example of a fold line forming device 100 (hereinafter, referred to as an "device 100") that forms the first marking 91 and the second marking 92 as fold lines on the outer package film 50. The device 100 includes a female mold 110, a male mold 120, and an air cylinder 130.

The female mold 110 is placed on a table 150. The female mold 110 is preferably placed on the table 150 via a silicone rubber sheet 140, for example. In order to suitably form the fold lines on the outer package film 50, it is preferable to form the fold lines while warming the outer package film 50. Therefore, a rubber heater 160, for example, is preferably attached to the female mold 110 such that the outer package film 50 can be warmed.

The male mold 120 presses the outer package film 50 against the female mold 110. A heating device such as a rubber heater (not illustrated), for example, is preferably attached to the male mold 120 such that the outer package film 50 can be warmed. Fold lines of a strength corresponding to the R shape at the tip of the male mold 120, the tip angle, and the pressure, the temperature, and the like when the male mold 120 is pressed are formed on the outer package film 50 by the outer package film 50 being sandwiched between the female mold 110 and the male mold 120.

The air cylinder 130 is connected to the male mold 120. The male mold 120 presses the outer package film 50 against the female mold 110 by the air cylinder 130 driving. Note that at least one of the fold line as the first marking 91 and the fold line as the second marking 92 may be formed on the outer package film 50 by folding the outer package film 50.

### <1-3. Method for manufacturing electrical storage device>

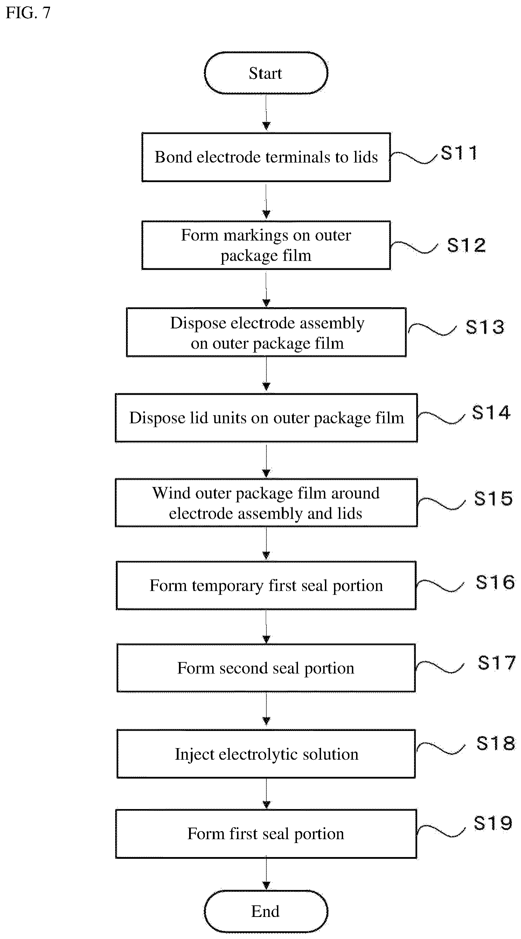

Fig. 7 is a flowchart illustrating an example of a method for manufacturing the electrical storage device 10. The method for manufacturing the electrical storage device 10 includes, for example, a first process, a second process, a third process, a fourth process, a fifth process, a sixth process, a seventh process, an eighth process, and a ninth process. The first to ninth processes are performed by, for example, a manufacturing apparatus of the electrical storage device 10. The manufacturing apparatus includes a fold line forming device 100. Note that the first to ninth processes are merely convenient labels for the processes in the method for manufacturing the electrical storage device 10 and do not necessarily mean the order of the processes. The order of the following processes can be arbitrarily changed.

In a first process in Step S11, the manufacturing apparatus bonds the lids 60 to the electrode terminals 30. A pair of lid units 60Z in which the electrode terminals 30 are bonded to the lids 60 are completed by completing the first process.

A second process (marking formation process) in Step S12 is carried out earlier or later than the first process. In the second process, the manufacturing apparatus forms the first marking 91 and the second marking 92 on the outer package film 50.

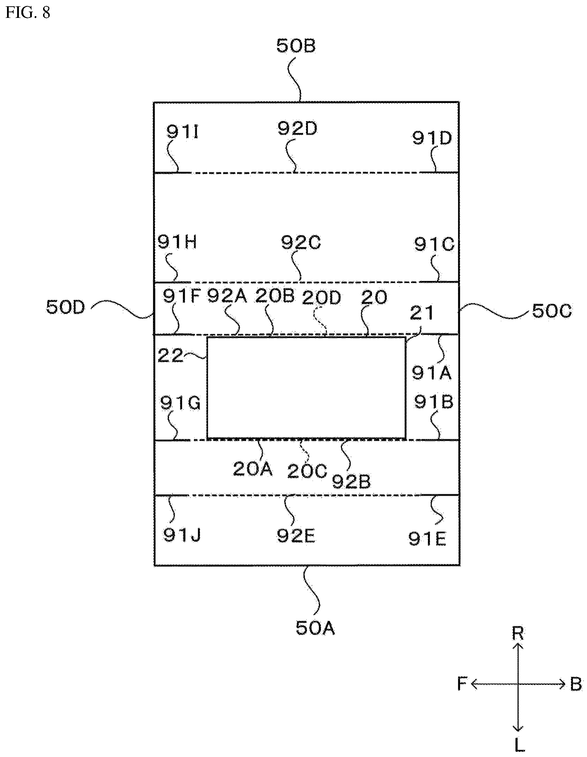

The third process in Step S13 is performed later than the first process and the second process. In the third process, the manufacturing apparatus disposes the electrode assembly 20 on the outer package film 50. As illustrated in Fig. 8, the electrode assembly 20 is disposed on the outer package film 50 such that the corner 20D of the electrode assembly 20 coincides with the marking 92A and the corner 20C of the electrode assembly 20 coincides with the marking 92B in the third process.

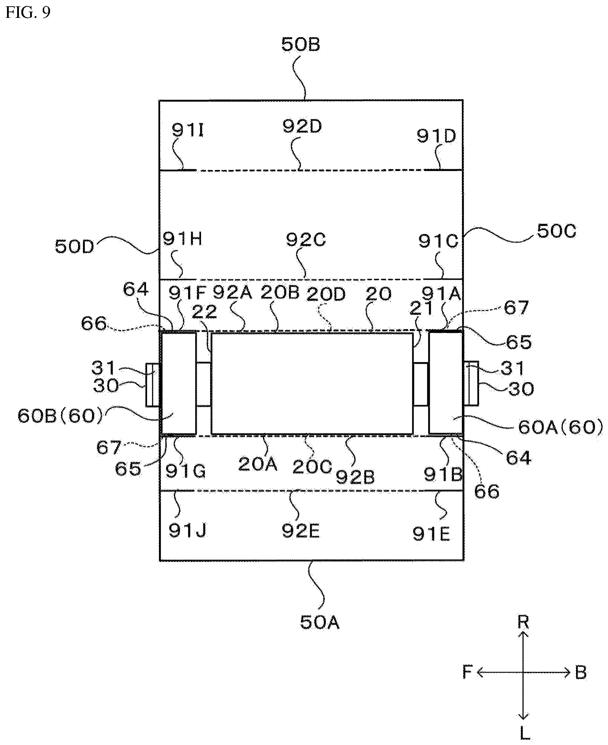

A fourth process (lid disposition process) in Step S14 is carried out later than the third process. In the fourth process, the manufacturing apparatus disposes the pair of lid units 60Z on lateral sides of the electrode assembly 20 and bonds the electrode terminals 30 to the electrode assembly 20. As illustrated in Fig. 9, the lid unit 60Z including the lid 60A is disposed on the outer package film 50 such that the corner 67 of the lid 60A coincides with the marking 91A and the corner 66 coincides with the marking 91B in the third process. In the fourth process, the lid unit 60Z including the lid 60B is disposed on the outer package film 50 such that the corner 66 of the lid 60B coincides with the marking 91F and the corner 67 coincides with the marking 91G. Note that the method for manufacturing the electrical storage device 10 may include a process of bonding the electrode assembly 20 to the electrode terminals 30 and bonding the lids 60 to the electrode terminals 30 bonded to the electrode assembly 20 instead of the first process and the fourth process.

The fifth process (wrapping process) in Step S15 is carried out later than the fourth process. In a fifth process, the manufacturing apparatus winds the outer package film 50 around the electrode assembly 20 and the lids 60. In the fifth process, the manufacturing apparatus wraps the electrode assembly 20 and the lids 60 by the outer package film 50 with the outer package film 50 folded along the first marking 91 and the second marking 92. In the fifth process, the manufacturing apparatus winds the outer package film 50 around the electrode assembly 20 and the lids 60 with a tension applied to the outer package film 50 while restricting the movement of the electrode assembly 20 and the lids 60 by a restriction means. The restriction means is, for example, a groove into which the electrode assembly 20 and the lid 60 are fitted. The restriction means may be an apparatus that applies an external force to the electrode assembly 20 and the lid 60 so that the electrode assembly 20 and the lid 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled.

A sixth process in Step S16 is carried out later than the fifth process. In the sixth process, the manufacturing apparatus forms a first seal portion (hereinafter, referred to as a "temporary first seal portion") with an unsealed portion partially formed to inject an electrolytic solution. In the temporary first seal portion, mutually facing heat-sealable resin layers 53 of the outer package film 50 are bonded. Note that in a case where the electrical storage device 10 is, for example, an all-solid-state battery, the process of injecting the electrolytic solution is not needed, and the manufacturing apparatus thus forms the first seal portion 70 in the sixth process.

A seventh process in Step S17 is carried out later than the sixth process. In the seventh process, the manufacturing apparatus forms the second seal portion 80 by heat-sealing the heat-sealable resin layer 53 of the outer package film 50 and the sealing surfaces 63 of the lids 60.

An eighth process in Step S18 is carried out later than the seventh process. In the eighth process, the manufacturing apparatus injects an electrolytic solution from the unsealed portion formed in the temporary first seal portion.

A ninth process in Step S19 is carried out later than the eighth process. In the ninth process, the manufacturing apparatus forms the first seal portion 70 by heat sealing a part of the temporary first seal portion including the unsealed portion. Note that in a case where the electrical storage device 10 is, for example, an all-solid-state battery, the eighth process and the ninth process are omitted.

### <1-4. Effect of electrical storage device>

The outer package film 50 of the electrical storage device 10 includes the first marking 91 formed to correspond to at least some of the corners 64 to 67 of the lids 60. Since the lids 60 can be positioned with respect to the outer package film 50 by the first marking 91, accuracy of the positions of the lids 60 with respect to the outer package film 50 is high.

### [2. Modifications]

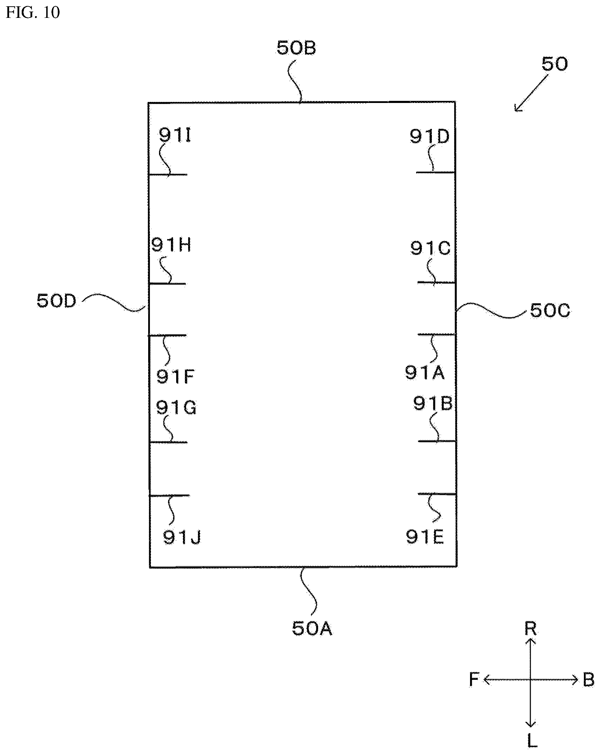

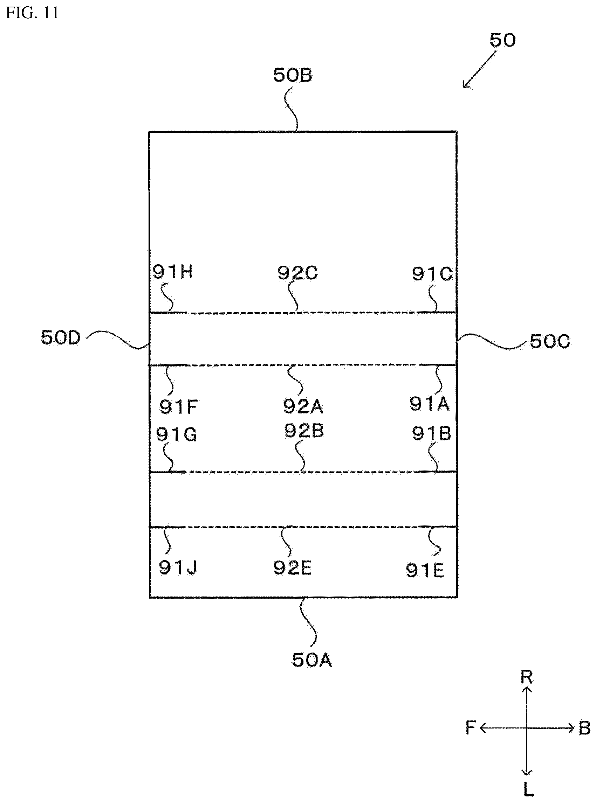

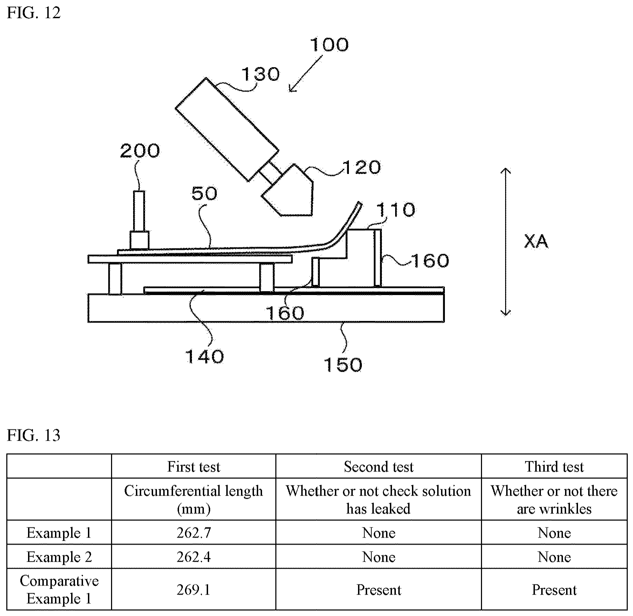

The above-described embodiments are an example of possible forms of an electrical storage device and a method for manufacturing an electrical storage device according to the present invention, and are not intended to limit the forms thereof. The electrical storage device and the method for manufacturing an electrical storage device according to the present invention may have a form different from those exemplified in the embodiments. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.
<2-1>
   In the above-described embodiment, it is only necessary for the outer package film 50 to have at least one of the markings 91A to 91J. For example, the outer package film 50 may include only the first marking 91 as illustrated in Fig. 10. In another example, the marking 92D, the marking 91D, and the marking 91I that are less necessary to form the second seal portion 80 may be omitted as illustrated in Fig. 11.
<2-2>
   In the above-described embodiment, at least one of the length, the type, and the fold line strength of at least one of the markings 91A to 91J and 92A to 92D may be different from that of the others. Note that the fold line strength may be defined by the angle by which the outer package film 50 stands when the outer package film 50 with the fold line formed thereon is installed on a plane or how much the heat-sealable resin layer 53 of the part where the fold line is formed is recessed, for example.
<2-3>
   The configuration of the device 100 can be arbitrarily changed. As illustrated in Fig. 12, the male mold 120 may be configured to approach or be separated from the female mold 110 in the direction intersecting the direction XA of gravity. In the example illustrated in Fig. 12, the position of the outer package film 50 is preferably fixed with respect to the table 150 by being pressed against the table 150 with a fixing tool 200.
<2-4>
   In the above embodiments, the outer package film 50 of the electrical storage device 10 may bulge outward as compared with at least one of the two lids 60 in the FB direction. The electrode assembly 20 is sealed by the part of the outer package film 50 sticking further outward than the lid 60 being closed. The part of the outer package film 50 sticking further than the lid 60 may be folded inward such that outer surfaces of the outer package film 50 are in contact with each other like a gable top container or may be folded toward an arbitrary surface of the outer packaging 40.
<2-5>
   In the above-described embodiment, the outer packaging 40 may not include one of the two lids 60. In this modification, the electrode assembly 20 is sealed by the part of the outer package film 50 sticking further outward than the electrode assembly 20 being closed at the part of the outer packaging 40 from which the lid 60 is omitted in the FB direction. The part of the outer package film 50 sticking further outward than the electrode assembly 20 may be folded like a gable top container or a brick-shaped container.
<2-6>
   In the above-described embodiments, the outer contour shape of the outer packaging 40 can be arbitrarily changed. The outer contour shape of the outer packaging 40 may be a cylinder, a prism, or a cube.

### [3. Examples]

The inventors of the present application conducted a first test, a second test, and a third test for electrical storage devices in Examples 1 and 2 and Comparative Example 1. In the following description, among the elements forming the electrical storage devices of examples and the comparative example, elements that are identical to those in the embodiment are given the same symbols as in the embodiment for illustration purpose.

Each of the electrical storage devices in Examples 1 and 2 is an electrical storage device according to the embodiment. The specifications of the electrical storage devices in Examples 1 and 2 are as follows.

The outer package film 50 is a laminate (laminated film) including a base material layer 51, a barrier layer 52 and a heat-sealable resin layer 53 in the stated order. In the base material layer 51 in each of Examples 1 and 2, a polyethylene terephthalate film, an adhesive agent layer, a stretched nylon film, and an adhesive agent layer are laminated in this order. The thickness of the polyethylene terephthalate film is 15 µm. The thickness of the stretched nylon film is 15 µm. Materials constituting both the adhesive agent layers are two-liquid-type urethane adhesive agents. The thickness of the adhesive agent layers after curing is 3 µm. A material constituting the barrier layer 52 in each of Examples 1 and 2 is an aluminum foil. The thickness of the barrier layer 52 in each of Examples 1 and 2 is 40 µm. In the heat-sealable resin layer 53 in each of Examples 1 and 2, maleic anhydride-modified polypropylene and random polypropylene are laminated in this order. The thickness of the maleic anhydride-modified polypropylene is 40 µm. The thickness of the random polypropylene is 40 µm.

A material constituting the lids 60 is polypropylene and is manufactured by injection molding. The lid 60 has a length (height) of 30 mm in the UD direction, a length (width) of 100 mm in the LR direction, and a length (thickness) of 5 mm in the FB direction. In other words, the length of the sealing surfaces 63 of the lids 60, that is, the circumferential length of the lids 60 is 260 mm.

The method for manufacturing the electrical storage devices in Examples 1 and 2 is similar to the method illustrated in Fig. 7. However, the electrical storage devices in Examples 1 and 2 used in the first test are in a state where processes up to the sixth process illustrated in Fig. 7 have been completed. However, the electrical storage devices in Examples 1 and 2 used in the second test and the third test are in a state where processes up to the seventh process illustrated in Fig. 7 have been completed. The outer package film 50 in each of Examples 1 and 2 includes the markings 91A, 91B, 91E, 91F, 91G, and 91J. The markings 91A, 91B, 91E, 91F, 91G, and 91J are formed using the device 100 illustrated in Fig. 12. The markings 91A, 91B, 91E, 91F, 91G, and 91J are fold lines. The pressing conditions of the male mold 120 against the female mold 110 in the second process are a linear pressure of 0.4 N/mm and a pressing time of 1 second in Example 1. The pressing conditions are a setting temperature of 60°C, a pressing time of 10 seconds, and a linear pressure of 1.2 N/mm in Example 2. Note that the markings 91A, 91B, 91E, 91F, 91G, and 91J were formed without heating the outer package film 50 in Example 1.

The sealing conditions for forming the temporary first seal portion 70 in the sixth process are a setting temperature of 226°C, a pressing time of 10 seconds, and a surface pressure of 0.25 MPa. The sealing conditions for forming the second seal portion 80 in the seventh process are a setting temperature of 180°C, a pressing time of 3 seconds, and a surface pressure of 0.78 MPa.

Specifications of the electrical storage device in the comparative example are similar to those of the electrical storage devices in Examples 1 and 2 other than that no markings are formed on the outer package film 50. However, the electrical storage devices in the comparative example used in the first test are in a state where the processes up to the sixth process illustrated in Fig. 7 have been completed. The electrical storage devices in the comparative example used in the second test and the third test are in a state where the processes up to the seventh process illustrated in Fig. 7 have been completed.

The first test is a test for measuring the circumferential lengths of the outer packagings 40. In the first test, the lengths (circumferential lengths) of the parts of the outer packagings 40 corresponding to the sealing surfaces 63 in the electrical storage devices in Examples 1 and 2 and Comparative Example 1 were measured.

The second test is a test for checking sealing performance of the outer packagings 40. In the second test, ageless sealing check spray (manufactured by Mitsubishi Gas Chemical Company) was sprayed to the inside of the outer packaging 40 by cutting and opening parts of the outer packagings 40 of the electrical storage devices in Examples 1 and 2 and Comparative Example 1, and whether or not the check solution leaked from the second seal portion 80 was visually checked after elapse of about five minutes.

The third test is a test for checking whether or not wrinkles are formed on the outer packagings 40. In the third test, whether or not wrinkles were formed on the outer packagings 40 of the electrical storage devices in Examples 1 and 2 and Comparative Example 1 was visually checked.

Fig. 13 illustrates results of the first test, the second test, and the third test.

In the first test, it was confirmed that the circumferential lengths of the outer packagings 40 were not largely different from the circumferential lengths of the lids 60 in the electrical storage devices in Examples 1 and 2. It is possible to ascertain that the outer package films 50 closely adhered to the sealing surfaces 63 of the lids 60 in the electrical storage devices in Examples 1 and 2. On the other hand, it was confirmed that the circumferential length of the outer packaging 40 was much longer than the circumferential length of the lids 60 in the electrical storage device in Comparative Example 1. This indicated that a gap was formed between the outer package film 50 and the sealing surfaces 63 of the lids 60 in the electrical storage device in Comparative Example 1.

In the second test, leaking of the check solution was not observed in the electrical storage devices in Examples 1 and 2. In other words, for the electrical storage devices in Examples 1 and 2, it was confirmed that a gap was not formed between the outer packagings 40 and the lids 60. In the electrical storage device in Comparative Example 1, leakage of the check solution was observed. In other words, for the electrical storage device in Comparative Example 1, it was confirmed that a gap was formed between the outer packaging 40 and the lids 60.

In the third test, no wrinkles were observed on the outer packagings 40 in the electrical storage devices in Examples 1 and 2. In other words, for the electrical storage devices in Examples 1 and 2, it was confirmed that the outer package films 50 closely adhered to the lids 60. In the electrical storage device in Comparative Example 1, wrinkles were observed on the outer packaging 40. In other words, for the electrical storage devices in Comparative Example 1, it was confirmed that adhesion of the outer package film 50 with respect to the lids 60 was low.

### Reference Signs List

10 Electrical storage device
20 Electrode assembly
20A, 20B, 20C, 20D Corner
40 Outer packaging
40A Opening part
50 Outer package film
60 Lid
64 to 67 Corner
91 First marking
92 Second marking

## Claims

1. An electrical storage device comprising:
an electrode assembly; and
an outer packaging that seals the electrode assembly,
wherein
the outer packaging includes
an outer package film that wraps the electrode assembly to form an opening part, and
a lid that is disposed at the opening part, and
the outer package film includes a first marking formed to correspond to at least some of corners of the lid.

2. The electrical storage device according to claim 1, wherein the first marking is at least one of a fold line, a line, and a cut that does not penetrate through the outer package film.

3. The electrical storage device according to claim 1 or 2, wherein the first marking is formed at least in a range including an end part of the corner of the lid.

4. The electrical storage device according to claim 1 or 2, wherein the outer package film includes a second marking formed to correspond to at least some of corners of the electrode assembly.

5. The electrical storage device according to claim 4, wherein the first marking and the second marking are connected.

6. An outer package film that is used as an outer packaging of an electrical storage device,
the electrical storage device including an electrode assembly and a lid,
the outer package film comprising a first marking that is formed to correspond to at least some of corners of the lid.

7. The outer package film according to claim 6, wherein the first marking is at least one of a fold line, a line, and a cut that does not penetrate through the outer package film.

8. The outer package film according to claim 6 or 7, wherein the first marking is formed at least in a range including an end part of the corner of the lid.

9. The outer package film according to claim 6 or 7, comprising a second marking that is formed to correspond to at least some of corners of the electrode assembly.

10. The outer package film according to claim 9, wherein the first marking and the second marking are connected.

11. A method for manufacturing an electrical storage device including
an electrode assembly and
an outer packaging that seals the electrode assembly,
the outer packaging including
an outer package film that wraps the electrode assembly to form an opening part, and
a lid that is disposed at the opening part,
the outer package film including a first marking that is formed to correspond to at least some of corners of the lid,
the method for manufacturing the electrical storage device comprising a marking formation process of forming the first marking on the outer package film.

12. The method for manufacturing an electrical storage device according to claim 11, comprising:
a disposition process of disposing the lid on the outer package film such that a corner of the lid and the first marking coincide with each other, the disposition process being performed later than the marking formation process; and
a wrapping process of wrapping the electrode assembly and the lid by the outer package film with the outer package film folded along the first marking, the wrapping process being performed later than the disposition process.
